# EUROPEAN PATENT APPLICATION

(11) **EP 4 435 551 A1**
(43) Date of publication of application: **25.09.2024**
(21) Application number: 24161095.5
(22) Date of filing: 04.03.2024
(51) Int. Cl.: G05D 16/06, G05D 16/10, F16K 1/42

(54) **REGULATOR**

(30) Priority: 22.03.2023 JP 2023045505
(71) Applicant: Nikki Co., Ltd., Atsugi-shi, Kanagawa-ken 243-0801 (JP)
(72) Inventor: SUENAGA, Naoya, Atsugi-shi, 243-0801 (JP); AIZAWA, Shutaro, Atsugi-shi, 243-0801 (JP); SUEMATSU, Yukinori, Atsugi-shi, 243-0801 (JP)
(74) Representative: Boult Wade Tennant LLP

(57) **Abstract**

A regulator capable of preventing leakage failure without requiring strict dimensional accuracy management and tricky assembly is provided.

An annular valve seat (100) that is formed of an elastic material and has a center hole (101) in a center, and a valve body (51) that is movable in an axis direction and is brought into contact with or separates from one of an inner peripheral edge and an outer peripheral edge of the valve seat (100) are included, in the valve seat (100), an annular groove (106) is formed on one of an inner peripheral surface or an outer peripheral surface to which a peripheral edge in contact with the valve body (51) belongs, and a surface of the valve body (51) in contact with the valve seat (100) is inclined with respect to the axis direction.

## Description

### Technical Field

The present invention relates to a regulator used when a high-pressure fluid is depressurized to a desired pressure and more particularly to a structure of a valve seat.

### Background Art

In the related art, a regulator which is a device for depressurizing a high-pressure fluid and adjusting the pressure to a desired pressure is widely known, and for example, the regulator is used as a pressure adjusting device when high-pressure fuel such as compressed natural gas (CNG) stored in a fuel tank is supplied to an engine. However, the method is roughly divided into two types of a piston type and a diaphragm type.

A piston type regulator is disclosed in, for example, JP 2007-146875 A (Patent Literature 1), JP 2013-041375 A (Patent Literature 2), and JP 2019-067216 A (Patent Literature 3) and adjusts a balance between a primary pressure applied to a piston and a secondary pressure against the primary pressure, and sets a pressure of ejected fuel to a desired pressure (secondary pressure).

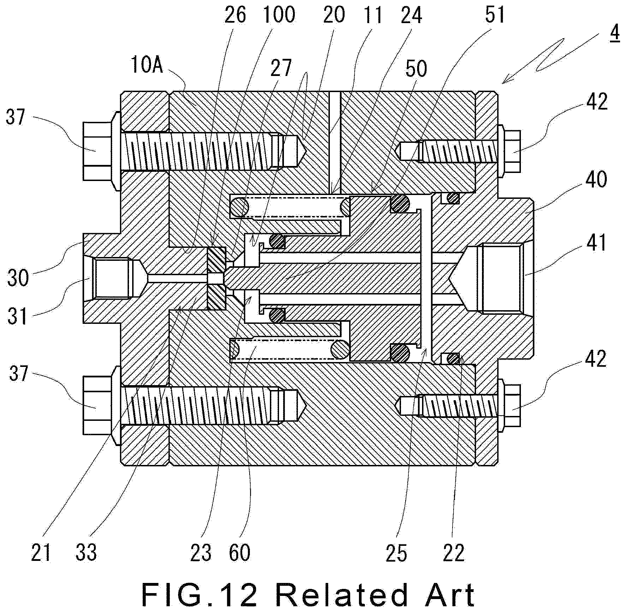

FIG. 12 illustrates an example of a piston type regulator. In a regulator 4, one opening end of a cylindrical passage 20 formed to penetrate a body 10A formed of metal, a hard synthetic resin, or the like is an input side 21 of a high-pressure fluid, and the other opening end is an output side 22 of a pressure-adjusted fluid. An inlet cover 30 having an introduction port 31 for airtightly introducing the fluid and an outlet cover 40 having an extraction port 41 for airtightly extracting the fluid are fixed to the input side 21 and the output side 22 by fixing tools 32 and 42 such as set screws.

The passage 20 is partitioned into a decompression chamber 23, an atmospheric pressure chamber 24, and a pressure adjusting chamber 25, and the high-pressure fluid introduced from the introduction port 31 is depressurized in the decompression chamber 23, then adjusted to a predetermined pressure in the pressure adjusting chamber 25, and discharged from the extraction port 41.

A fitting recess portion 26 having an annular holding piece 27 is formed on the input side 21 of the passage 20, and a cylindrical fitting protrusion portion 33 is formed to protrude on a side opposite to the introduction port 31 in the inlet cover 30. A valve seat holding portion is configured by the fitting recess portion 26 and the fitting protrusion portion 33. An annular valve seat 100 formed of an elastic material such as a resin or rubber is fitted between the fitting recess portion 26 and the fitting protrusion portion 33 and held while being pressed in the axial direction.

The output side 22 of the passage 20 is provided with: a piston 50 including a valve body 51 that comes into contact with or separates from the valve seat 100, the piston being arranged slidably in the passage 20 in the axial direction and partitioning the decompression chamber 23, the atmospheric pressure chamber 24, and the pressure adjusting chamber 25; and a pressure adjusting spring 60 that biases the piston 50 toward the output side 22.

In order to exhibit the performance as designed without causing failure, in the regulator 4 like this, both the component accuracy and the assembly accuracy are required to be high, and if the contact between the valve seat and the valve body becomes non-uniform due to axial deviation, inclination, or the like of the valve body, it is concerned that a functional loss may occur due to leakage failure or the like.

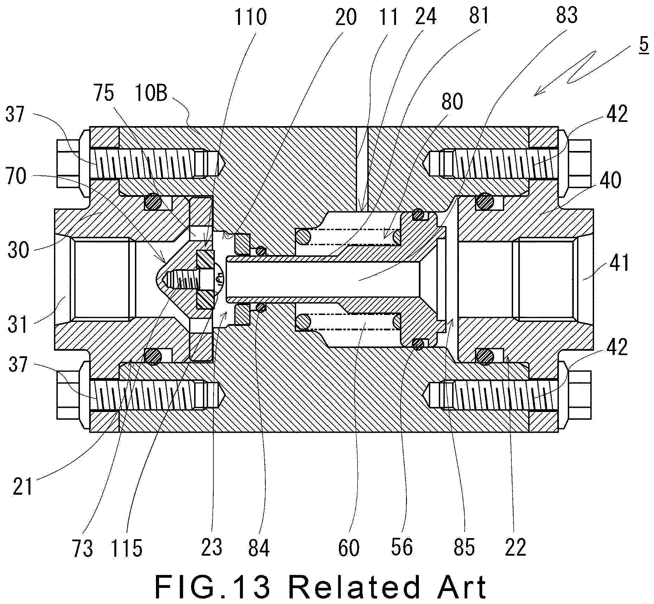

Also, FIG. 13 illustrates a different example of the piston type regulator, and the configurations of the valve seat holding portion holding the valve seat and the piston are different.

That is, in a regulator 5, a valve seat 110 is held by a disk-shaped valve seat holding member 70 mounted between the inlet cover 30 and a body 10B, and a piston 80 is configured to include a cylindrical valve body 81 that opens and closes a fluid passage 83 by coming into contact with the valve seat 110.

In order to exhibit the performance as designed without causing failure, in the regulator 5 like this, both the component accuracy and the assembly accuracy are required to be high, and if the contact between the valve seat and the valve body becomes non-uniform due to a shake, inclination, or the like of the valve body, it is concerned that a functional loss may occur due to a leakage failure or the like.

The diaphragm type regulator is disclosed, for example, in JP 2012-007481 A (Patent Literature 4) and JP 2014-169703 A (Patent Literature 5).

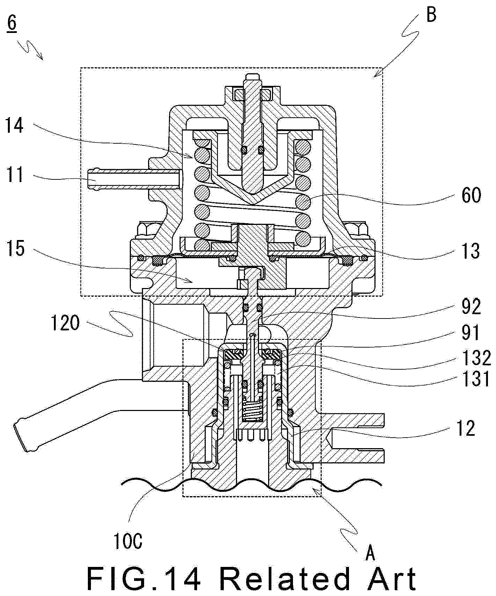

FIG. 14 illustrates an example of a diaphragm type regulator. A regulator 6 includes a doughnut-shaped valve seat 120 formed to pass through a valve hole in the center, a valve body 91 having an inclined surface on the distal end side, and a valve shaft 92 coaxially having the valve body 91 and reciprocating and sliding in an axial direction according to a pressure fluctuation in a pressure adjusting chamber. In the regulator that configures a pressure adjusting mechanism maintaining a pressure in the pressure adjusting chamber constant while opening and closing a valve by causing the inclined surface to be brought into close contact with and separated from a seat surface 122 formed in a valve hole opening portion and depressurizes and adjusts introduced gas to send out the gas to the downstream side, the valve seat 120 is disposed in a state of being pressed in the axis direction by a plate 132 biased by a predetermined pressing force by a spring 131, is also slidable in a predetermined range in the direction perpendicular to the axis with a gap on the outer peripheral side, and thus has a structure in which the inclined surface slides and guides in a direction in which the axial core of the valve seat coincides with the axial core of the valve body 91 while abutting against the seat surface 122 side by an operation of the valve body 91 to the valve closing side so that the axial core of the valve body 91 and the axial core of the valve seat 120 coincide in a valve closed state.

With the regulator 6, in addition to the simple pressure adjusting function, the valve seat slides in the direction perpendicular to the axis, so that the assembly is easy, and the alignment action is exhibited. However, the axis direction adjusting function is not particularly mentioned, and it cannot be said that the countermeasure against the axial deviation and inclination of the valve body is sufficient.

In the regulator 4, the regulator 5, and the regulator 6, in order to avoid the leakage failure problem without changing the component configuration, it is necessary to strictly manage the dimensional accuracy of each component and to assemble the components with time and labor, which causes a problem of an increase in cost.

### Citation List

### Patent Literature

Patent Literature 1: JP 2007-146875 A
Patent Literature 2: JP 2013-041375 A
Patent Literature 3: JP 2019-067216 A
Patent Literature 4: JP 2012-007481 A
Patent Literature 5: JP 2014-169703 A

### Summary of Invention

### Technical Problem

The present invention is conceived to solve the problems of the regulators in the related art, and an object of the present invention is to provide a regulator capable of preventing leakage failure without requiring strict dimensional accuracy management and tricky assembly.

### Solution to Problem

The present invention made to solve the above problems is a regulator that depressurizes a pressure of a high-pressure fluid to obtain a fluid adjusted to a desired pressure, the regulator including: an annular valve seat that is formed of an elastic material and has a center hole in a center; and a valve body that is movable in an axis direction and is brought into contact with or separates from one of an inner peripheral edge and an outer peripheral edge of the valve seat, in which, in the valve seat, an annular groove is formed on one of an inner peripheral surface or an outer peripheral surface to which a peripheral edge in contact with the valve body belongs, and a surface of the valve body in contact with the valve seat is inclined with respect to the axis direction.

According to the above invention, the valve seat having the annular groove is deformed by itself according to the pressing force from the valve body, so that the inner peripheral edge or the outer peripheral edge in contact with the valve body can be brought into close contact with the valve body. Therefore, it is possible to prevent leakage failure without requiring strict dimensional accuracy management and tricky assembly, and in particular, strong and excellent sealability can be exhibited against axial deviation and inclination of the valve body.

In the present invention, when a corner portion of the valve seat in contact with the valve body has a rounded shape, an effect of increasing the contact area between the valve seat and the valve body and a guiding effect can be expected, and leakage failure can be more reliably prevented, which is particularly desirable.

In the present invention, when a shape of the annular groove is a U-shaped groove having a U-shaped cross section in which both side surfaces of the groove are parallel, and a bottom surface of the groove is a concave curved surface, or a Π-shaped groove having a Π-shaped cross section in which both side surfaces of the groove are parallel, and a bottom surface of the groove is a flat surface, molding and processing are easy, deformation easily occurs, and leakage failure can be more reliably prevented, which is particularly desirable.

In the present invention, it is desirable that the valve body has a tapered shape with a small diameter on a distal end side. In addition, when the groove diameter of the annular groove is equal to or larger than the seal diameter of the valve body, deformation is more likely to occur, and leakage failure can be more reliably prevented.

Otherwise, in the present invention, it is desirable that the valve body has a reversely tapered shape with a large diameter on a distal end side and also has a cylindrical shape having a fluid passage through which a fluid can pass. In addition, when the groove diameter of the annular groove is equal to or less than the seal diameter of the valve body, deformation is more likely to occur, and leakage failure can be more reliably prevented. Advantageous Effects of Invention

According to the present invention, it becomes possible to prevent leakage failure by intentionally elastically deforming a valve seat by an annular groove formed in the valve seat and to exhibit more excellent sealing performance.

### Brief Description of Drawings

FIG. 1 is a cross-sectional view illustrating a valve closed state according to a first embodiment of the present invention;
FIG. 2 is a cross-sectional view illustrating a valve open state of the embodiment illustrated in FIG. 1;
FIG. 3A is a perspective view illustrating a valve seat according to the embodiment illustrated in FIG. 1, and FIG. 3B is a perspective view in which a part is cut out;
FIG. 4A is a diagram illustrating a state in which a valve body and the valve seat are in contact with each other, and FIG. 4B is a diagram illustrating a state in which the valve body further moves in the valve seat direction, in a deformation process of the valve seat in the embodiment illustrated in FIG. 1;
FIG. 5 is a cross-sectional view illustrating a valve closed state according to a second embodiment of the present invention;
FIG. 6 is a cross-sectional view illustrating a valve open state of the embodiment illustrated in FIG. 5;
FIG. 7A is a perspective view illustrating a valve seat according to the embodiment illustrated in FIG. 5, and FIG. 7B is a perspective view in which a part is cut out;
FIG. 8A is a diagram illustrating a state in which a valve body and the valve seat are in contact with each other, and FIG. 8B is a diagram illustrating a state in which the valve body further moves in the valve seat direction, in a deformation process of the valve seat in the embodiment illustrated in FIG. 5;
FIG. 9 is a cross-sectional view illustrating a valve closed state according to a third embodiment of the present invention;
FIG. 10A is a perspective view illustrating a valve seat according to the embodiment illustrated in FIG. 9, and FIG. 10B is a perspective view in which a part is cut out;
FIG. 11A is a diagram illustrating a state in which a valve body and the valve seat are in contact with each other, and FIG. 11B is a diagram illustrating a state in which the valve body further moves in the valve seat direction, in a deformation process of the valve seat in the embodiment illustrated in FIG. 9;
FIG. 12 is a cross-sectional view illustrating an example of a piston type regulator in the related art;
FIG. 13 is a cross-sectional view illustrating another example of the piston type regulator in the related art; and
FIG. 14 is a cross-sectional view illustrating an example of a diaphragm type regulator in the related art.

### Description of Embodiments

Hereinafter, embodiments of the present invention are described with reference to the drawings.

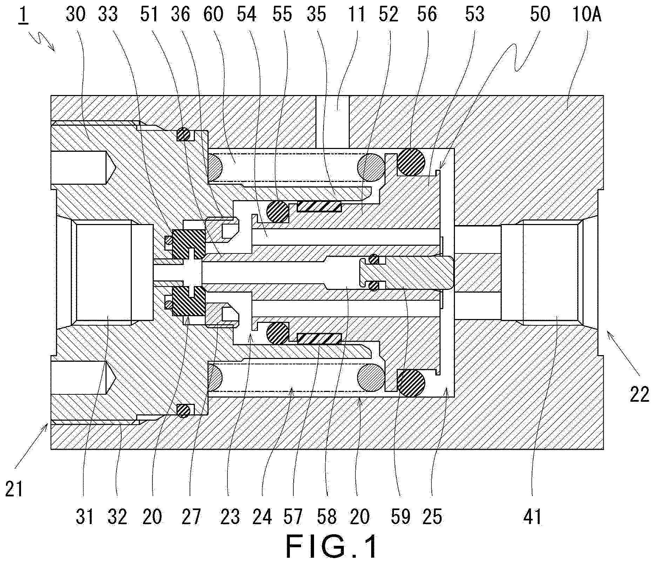

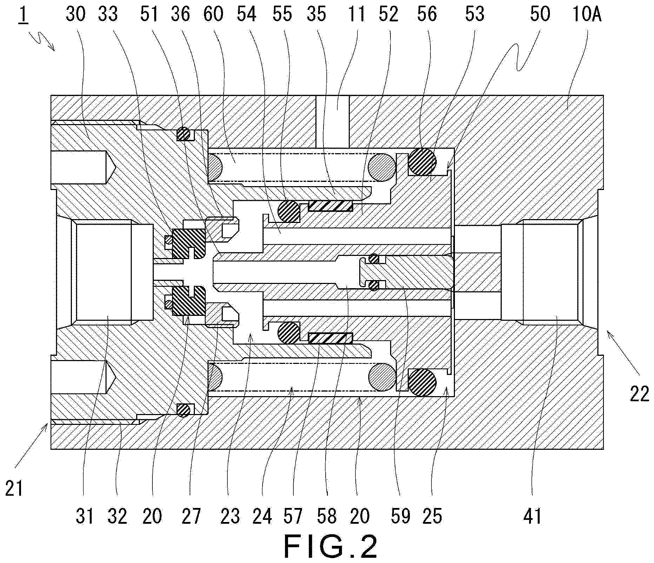

FIGS. 1 to 4 are diagrams illustrating a first embodiment of a regulator according to the present invention.

In a regulator 1, one opening end of a cylindrical passage 20 formed to penetrate a body 10A formed of metal, a hard synthetic resin, or the like is an input side 21 of a high-pressure fluid, and the other opening end is an output side 22 of a pressure-adjusted fluid. An inlet cover 30 having an introduction port 31 for airtightly introducing the fluid is fixed to the input side 21 by the fixing portion 32, and an extraction port 41 for airtightly extracting the fluid is formed on the output side 22.

The passage 20 is partitioned into a decompression chamber 23, an atmospheric pressure chamber 24, and a pressure adjusting chamber 25, in an order from the input side 21 to the output side 22, and the high-pressure fluid introduced from the introduction port 31 is depressurized in the decompression chamber 23, then adjusted to a predetermined pressure in the pressure adjusting chamber 25, and discharged from the extraction port 41. Note that reference numeral 11 denotes a communication hole for causing the pressure in the atmospheric pressure chamber 24 to be equal to the atmospheric pressure by communicating the atmospheric pressure chamber 24 with the external space of the body 10A.

A valve seat holding hole 33, a valve seat holding piece mounting portion 34 having a female screw formed in an inner periphery, and a cylindrical body 35 are formed on a side opposite to the introduction port 31 in the inlet cover 30.

An annular valve seat holding piece 36 having a male screw formed on an outer periphery can be mounted on the valve seat holding piece mounting portion 34, and the valve seat holding piece 36 is mounted to the valve seat holding piece mounting portion 34 in a state in which the annular valve seat 100 is fitted into the valve seat holding hole 33 to undetachably hold the valve seat 100.

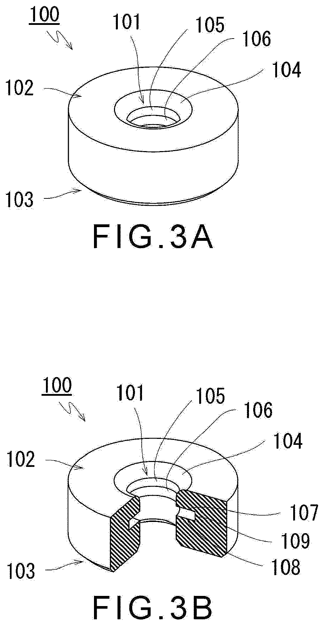

The valve seat 100 is formed of an elastic material such as a resin or rubber, has an annular shape in which a center hole 101 is formed, and has a seat surface 102 in contact with a valve body 51 of a piston 50 and a back surface 103 on the opposite side. An inner peripheral edge 104 of the center hole 101 in contact with the valve body 51 has a round chamfered shape (see FIG. 3).

The output side 22 of the passage 20 is provided with the piston 50 that is arranged slidably in the passage 20 in the axial direction and partitions the decompression chamber 23, the atmospheric pressure chamber 24, and the pressure adjusting chamber 25, and a pressure adjusting spring 60 that biases the piston 50 toward the output side 22.

The piston 50 is formed by integrally forming the valve body 51 that is brought into contact with and is separated from the valve seat 100, an inlet-side piston portion 52 that partitions the inside of the passage 20 into the decompression chamber 23 and the atmospheric pressure chamber 24, an outlet-side piston portion 53 that partitions the inside of the passage 20 into the atmospheric pressure chamber 24 and the pressure adjusting chamber 25, and a fluid passage 54 that communicates the decompression chamber 23 and the pressure adjusting chamber 25. Note that, in the valve body 51, the surface in contact with the valve seat 100 is inclined with respect to the axis direction.

Note that, reference numeral 55 denotes a seal member externally fitted to the inlet-side piston portion 52, reference numeral 56 denotes a seal member externally fitted to the outlet-side piston portion 53, and reference numeral 57 denotes a collar externally fitted to the inlet-side piston portion 52. The collar 57 is made of a material having good slipperiness, is formed to have an outer diameter substantially coinciding with the inner diameter of the cylindrical body 35, and is a component for smoothly guiding the piston 50 without shaking when sliding in the axial direction.

The piston 50 includes a conduction hole 58 that is formed to penetrate the piston so as to coincide with a central axis of the piston and of which an inner diameter is equal to a seal diameter SD1 of the valve body 51 and has a structure in which a rod 59 is inserted into the conduction hole 58 airtightly and movably in the axis direction, a load due to a fuel inlet pressure applied to the piston 50 can be offset by receiving the load by the rod 59, and the pressure at the fuel outlet is stabilized by the fuel inlet pressure.

The pressure adjusting spring 60 is set to have a strength so as to be balanced with a pressure load received by the piston 50, is mounted in the atmospheric pressure chamber 24 to come into contact with the outlet-side piston portion 53 of the piston 50, and biases the body 10A and the piston 50 in directions of being separated from each other.

The operation of the regulator having the above configuration is described below.

First, when a high-pressure fluid is introduced from the introduction port 31, the fluid passes through the center hole 101 formed in the valve seat 100 and flows into the decompression chamber 23.

At this time, in the initial stage, the piston 50 is pushed by the pressure adjusting spring 60, the valve seat 100 and the valve body 51 are in the valve open state of being separated from each other, and the fluid flows into the pressure adjusting chamber 25 through the fluid passage 54.

Thereafter, as the pressure in the pressure adjusting chamber 25 increases due to the fluid flowing into the pressure adjusting chamber 25 side, the piston 50 is pushed toward the input side 21, and the valve seat 100 and the valve body 51 are in the valve closed state of being brought into contact with each other at a point in time when the pressure in the pressure adjusting chamber 25 reaches a predetermined pressure, and the inflow of the fluid is blocked.

Then, when the fluid in the pressure adjusting chamber 25 is discharged from the extraction port 41 and the pressure in the pressure adjusting chamber 25 decreases, the piston 50 is pushed by the pressure adjusting spring 60, and the valve seat 100 and the valve body 51 return to the valve open state of being separated from each other.

The pressure of the fluid discharged by repeating the above operation and changing the gap area between the valve seat 100 and the valve body 51 is kept constant.

Here, a difference from the regulator 4 in the related art illustrated in FIG. 12 is that in the valve seat 100 formed of an elastic material such as a resin or rubber, an annular groove 106 having a predetermined depth and width toward the center is formed on an inner peripheral surface 105 which is a peripheral surface to which the inner peripheral edge 104 in contact with the valve body 51 belongs.

Since the annular groove 106 is formed, the valve seat 100 has a structure that is easily deformed. When the valve body 51 comes into contact with the valve seat 100 and presses the valve seat 100 in the axial direction, the valve seat 100 is elastically deformed by the pressing force to be a valve closed state of being brought into close contact with the valve body 51, exhibits excellent sealability, and prevents sealing failure.

At this time, since a groove diameter GD1 of the annular groove 106 is equal to or larger than the seal diameter SD1 of the valve body, the ease of deformation can be improved so that deformation is flexibly performed, and thus sealing failure can be more reliably prevented.

In addition, in the present embodiment, the shape of the annular groove 106 is a U-shaped groove having a U-shaped cross section in which both side surfaces 107 and 108 of the groove are parallel and the bottom surface 109 of the groove is a concave curved surface. Therefore, the shape enables molding and processing to be easy and deformation to easily occur.

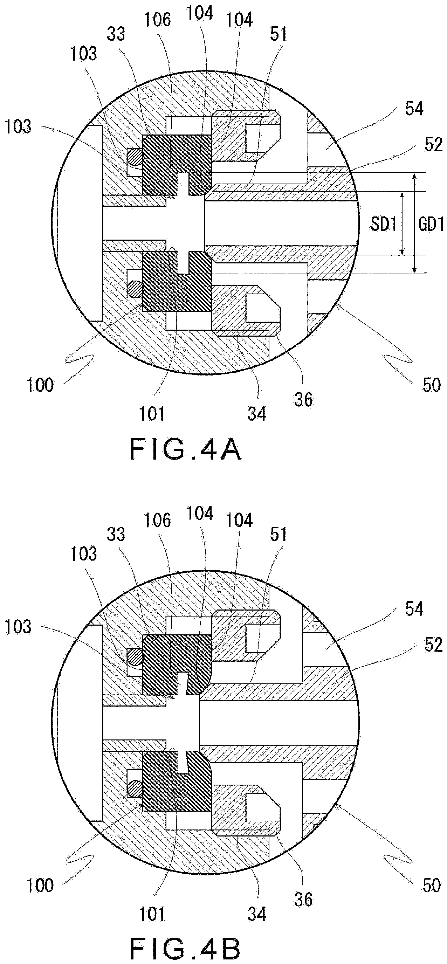

Hereinafter, a deformation process of the valve seat 100 is described based on FIG. 4.

First, FIG. 4A is a diagram illustrating a state in which the valve body is moved until coming into contact with the inner peripheral edge of the valve seat 100, and when the valve body 51 further moves in the direction of the valve seat 100 therefrom, a pressing force is applied to the valve seat 100 by the valve body.

FIG. 4B is a diagram illustrating a state in which the valve body further moves in the direction of the valve seat 100. As illustrated in FIG. 4B, by causing elastic deformation in which the seat surface 102 side of the valve seat 100 is bent so as to approach the back surface 103 side such that the gap of the annular groove 116 narrows, the valve can be reliably closed in close contact with the valve body.

Thereafter, if the fluid in the pressure adjusting chamber 25 is discharged from the extraction port 41, and the pressure in the pressure adjusting chamber 25 decreases, when the piston 50 is pushed by the pressure adjusting spring 60, and the valve seat 100 and the valve body 51 return to the valve open state of being separated from each other, the valve seat also returns from the deformed state to the original state before the deformation illustrated in FIG. 4A.

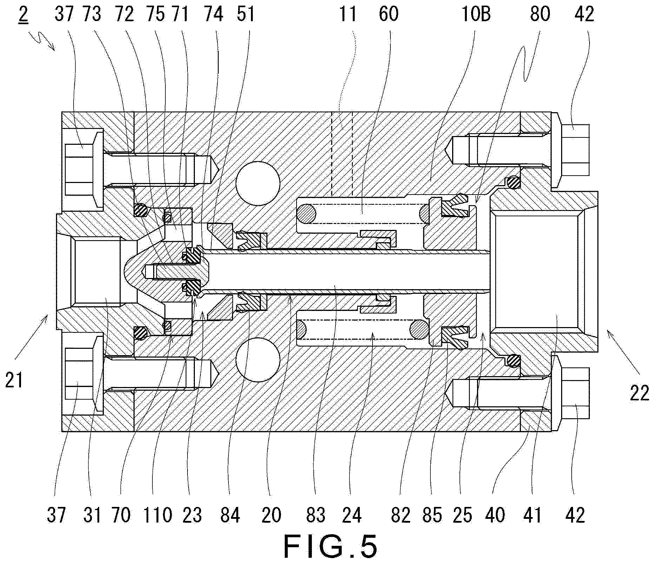

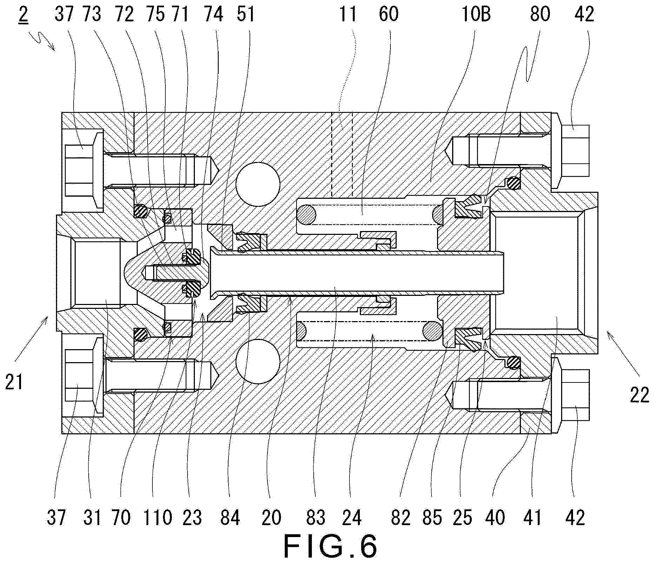

FIGS. 5 to 8 are cross-sectional views illustrating a second embodiment of the regulator according to the present invention, and the same components as those of the regulator 5 in the related art illustrated in FIG. 13 are denoted by the same reference numerals.

In a regulator 2, one opening end of the cylindrical passage 20 formed to penetrate a body 10B formed of metal, a hard synthetic resin, or the like is the input side 21 of the high-pressure fluid, and the other opening end is the output side 22 of the pressure-adjusted fluid. The inlet cover 30 having the introduction port 31 for airtightly introducing the fluid and the outlet cover 40 having the extraction port 41 for airtightly extracting the fluid are fixed to the input side 21 and the output side 22 by fixing tools 37 and 42 such as set screws.

The passage 20 is partitioned into the decompression chamber 23, the atmospheric pressure chamber 24, and the pressure adjusting chamber 25, and the high-pressure fluid introduced from the introduction port 31 is depressurized in the decompression chamber 23, then adjusted to a predetermined pressure in the pressure adjusting chamber 25, and discharged from the extraction port 41. Note that reference numeral 11 denotes a communication hole for causing the pressure in the atmospheric pressure chamber 24 to be equal to the atmospheric pressure by communicating the atmospheric pressure chamber 24 with the external space of the body 10B.

A disk-shaped valve seat holding member 70 is mounted between the inlet cover 30 and the body 10B on an input side 21 of the passage 20, and the valve seat 110 is held by the valve seat holding member 70 which is a valve seat holding portion.

The valve seat holding member 70 includes a valve seat holding hole 71 having an inner diameter substantially matching an outer diameter of the valve seat 110, a screw hole 72 formed continuously with the valve seat holding hole 71, a fixing screw 73 formed with a head portion 74 having a diameter larger than a diameter of a center hole 111 of the valve seat 110 and screwed into the screw hole 72, and a through hole 75 through which a fluid passes.

With respect to the attachment of the valve seat 110 to the valve seat holding member 70, the valve seat 110 is inserted into the valve seat holding hole 71, and the fixing screw 73 having the head portion 74 having a diameter larger than the diameter of the center hole 111 of the valve seat 110 is screwed into the screw hole 72, so as to undetachably hold the valve seat 110.

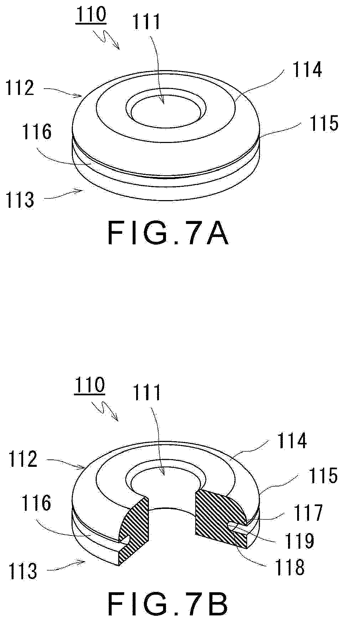

The valve seat 110 has an annular shape in which the center hole 111 is formed and has a seat surface 112 in contact with the valve body 81 and a back surface 113 on the opposite side. An outer peripheral edge 114 in contact with the valve body 81 has a round chamfered shape (see FIG. 7).

The output side 22 of the passage 20 is provided with the piston 80 that is arranged slidably in the passage 20 in the axial direction and partitions the decompression chamber 23, the atmospheric pressure chamber 24, and the pressure adjusting chamber 25, and a pressure adjusting spring 60 that biases the piston 80 in the direction of the output side 22.

The piston 80 is formed with the valve body 81 that is brought into contact with and is separated from the valve seat 110 and also partitions the inside of the passage 20 into the decompression chamber 23 and the atmospheric pressure chamber 24, a piston portion 82 that partitions the inside of the passage 20 into the atmospheric pressure chamber 24 and the pressure adjusting chamber 25, and the fluid passage 83 that is formed to penetrate the valve body 81 and communicates the decompression chamber 23 and the pressure adjusting chamber 25. Note that reference numeral 84 denotes a seal member externally fitted to the valve body 81, and reference numeral 85 denotes a seal member externally fitted to the piston portion 82. Also, in the valve body 81, the surface in contact with the valve seat 110 is inclined with respect to the axis direction.

The pressure adjusting spring 60 is set to have a strength so as to be balanced with a pressure load received by the piston 80, is mounted in the atmospheric pressure chamber 24 to come into contact with the piston portion 82 of the piston 80, and biases the body 10B and the piston 80 in directions of being separated from each other.

Here, a difference from the regulator 5 in the related art illustrated in FIG. 13 is that in the valve seat 110 made of an elastic material such as a resin or rubber, an annular groove 116 having a predetermined depth and width toward the center is formed on an outer peripheral surface 115 which is a peripheral surface to which the outer peripheral edge 114 in contact with the valve body 81 belongs.

Since the annular groove 116 is formed, the valve seat 110 has a structure that is easily deformed. When the valve body 81 comes into contact with the valve seat 110 and presses the valve seat 110 in the axial direction, the valve seat 110 can be elastically deformed by the pressing force to be a valve closed state of being brought into close contact with the valve body 81, exhibit excellent sealability, and prevent sealing failure.

At this time, since a groove diameter GD2 of the annular groove 116 is equal to or less than a seal diameter SD2 of the valve body, the ease of deformation can be improved so that the deformation is flexibly performed, and thus sealing failure can be more reliably prevented.

In addition, in the present embodiment, the shape of the annular groove 116 is a Π-shaped groove having a Π-shaped cross section in which both side surfaces 117 and 118 of the groove are parallel, and the bottom surface 119 of the groove is a flat surface. Therefore, the shape enables molding and processing to be easy and deformation to easily occur.

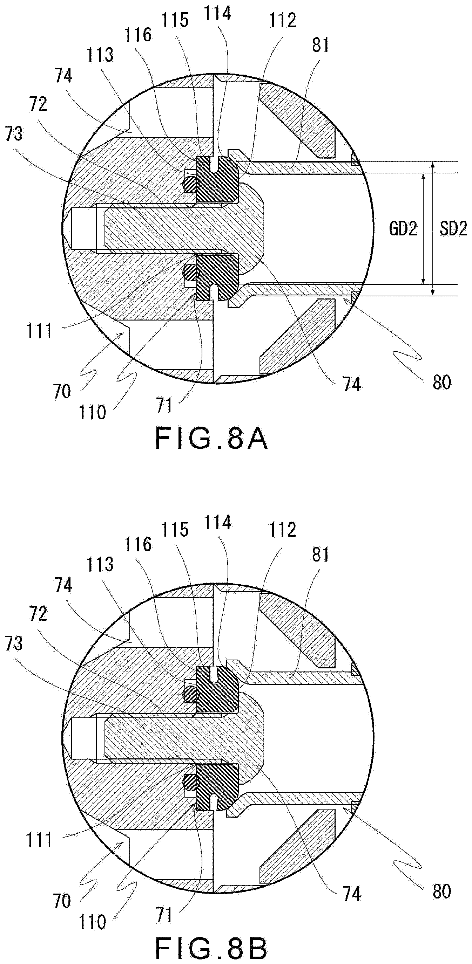

Hereinafter, a deformation process of the valve seat 110 is described based on FIG. 8.

First, FIG. 8A is a diagram illustrating a state in which the valve body is moved until coming into contact with the outer peripheral edge of the valve seat 110, and when the valve body 81 further moves in the direction of the valve seat 110 therefrom, a pressing force is applied to the valve seat 110 by the valve body 81.

FIG. 8B is a diagram illustrating a state in which the valve body 81 further moves in the direction of the valve seat 110. As illustrated in FIG. 8B, by causing elastic deformation in which the seat surface 112 side of the valve seat 110 is bent so as to approach the back surface 113 side such that the gap of the annular groove 116 narrows, the pressing force can be absorbed in close contact with the valve body 81.

Thereafter, if the fluid in the pressure adjusting chamber 25 is discharged from the extraction port 41, and the pressure in the pressure adjusting chamber 25 decreases, when the piston 50 is pushed by the pressure adjusting spring 60, and the valve seat 110 and the valve body 51 return to the valve open state of being separated from each other, the valve seat also returns from the deformed state to the original state before the deformation illustrated in FIG. 8A.

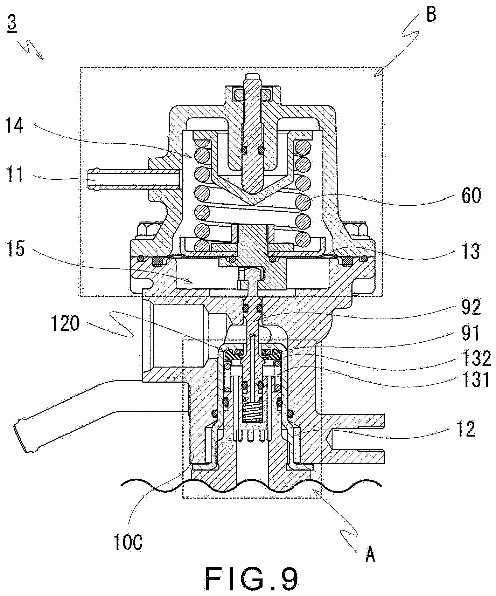

FIGS. 9 to 11 are cross-sectional views illustrating a third embodiment of the present invention, and the same components as those of the regulator 6 in the related art illustrated in FIG. 14 are denoted by the same reference numerals. Note that, in FIG. 9, description of a structure not related to the present invention is partially omitted.

A regulator 3 is a regulator that includes the doughnut-shaped valve seat 120 formed by passing through the center hole 121 in the center inside a body 10C formed of metal, a hard synthetic resin, or the like and having the introduction port 31 and the extraction port 41 of the fluid, the valve body 91 having an inclined surface on the distal end side, and the valve shaft 92 that coaxially has the valve body 91 and reciprocates and slides in the axial direction, configures a pressure adjusting mechanism for maintaining a pressure constant by opening and closing the valve by causing the valve body 91 to be brought into close contact with and separated from the valve seat 120, and depressurize and pressure-adjust introduced fluid to send out the fluid to the downstream side.

The regulator 3 has a high pressure portion A surrounded by a broken line in which a high-pressure fluid is introduced and passes through the valve body 91 and the valve seat 120 and a low pressure portion B surrounded by a broken line in which a depressurized fluid having passed through the high pressure portion A is pressure-adjusted and ejected. Note that the high pressure portion A is detachably mounted to the body 10C in a state of being airtightly inserted into a cartridge container 12 formed in a cylindrical shape.

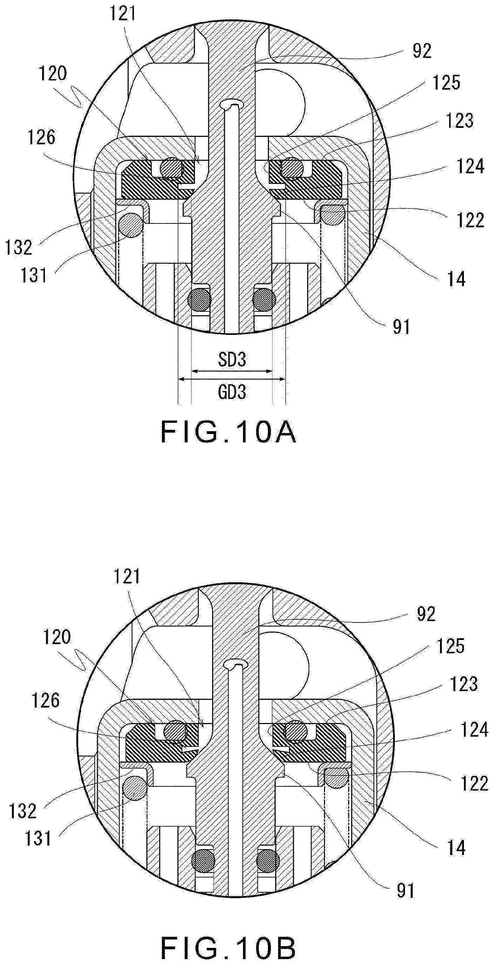

The valve seat 120 is formed of an elastic material such as a resin or rubber, has an annular shape in which the center hole 121 is formed, and has the seat surface 122 in contact with the valve body 91 and a back surface 123 on the opposite side. An inner peripheral edge 124 of the center hole 121 in contact with the valve body 91 has a round chamfered shape (see FIG. 10).

The valve seat 120 is disposed in a state of being pressed in the axis direction by the plate 132 biased by a predetermined pressing force by the spring 131, also is slidable in a predetermined range in the direction perpendicular to the axis with a gap on the outer peripheral side, and thus has a structure in which the valve body 91 slides and guides in a direction in which the axial core of the valve seat 120 coincides with the axial core of the valve body 91 while being in contact with the seat surface 122 side of the valve seat 120 by an operation of the valve body 91 to the valve closing side to cause the axial core of the valve body 91 and the axial core of the valve seat 120 coincide in a valve closed state.

In the regulator 3 having the above configuration, by the pressure of the high-pressure fluid introduced from the fluid inlet, the valve body is separated from the valve seat, and the valve is opened, and the fluid passes through the center hole of the valve seat while being depressurized. Thereafter, the fluid is introduced into the pressure adjusting chamber 15 partitioned from the atmospheric pressure chamber 14 by a diaphragm 13, and pressure-adjusted to have a pressure balanced with the pressure adjusting spring 60, and then ejected from the fluid outlet. At the time of pressure adjustment, the valve shaft 92 strokes in the axis direction according to the displacement of the diaphragm 13. Note that reference numeral 11 denotes a communication hole for causing the pressure in the atmospheric pressure chamber 14 to be equal to the atmospheric pressure by communicating the atmospheric pressure chamber 14 with the external space of the body 10C.

Here, a difference from the regulator 6 in the related art illustrated in FIG. 14 is that in the valve seat 120 made of an elastic material such as a resin or rubber, an annular groove 126 having a predetermined depth and width toward the center is formed on an inner peripheral surface 125 which is a peripheral surface to which the inner peripheral edge 124 in contact with the valve body 91 belongs.

Since the annular groove 126 is formed, the valve seat 120 has a structure that is easily deformed. When the valve body 91 comes into contact with the valve seat 120 and presses the valve seat 120 in the axial direction, the valve seat 120 can be elastically deformed by the pressing force to be a valve closed state of being brought into close contact with the valve body 91, exhibit excellent sealability, and prevent sealing failure.

At this time, since a groove diameter GD3 of the annular groove 126 is equal to or larger than a seal diameter SD3 of the valve body 91, the ease of deformation can be improved so that the deformation is flexibly performed, and thus sealing failure can be more reliably prevented.

In addition, in the present embodiment, the shape of the annular groove 126 is a Π-shaped groove having a Π-shaped cross section in which both side surfaces 127 and 128 of the groove are parallel, and the bottom surface 129 of the groove is a flat surface. Therefore, the annular groove has a shape that is easy to mold and process and is easily deformed.

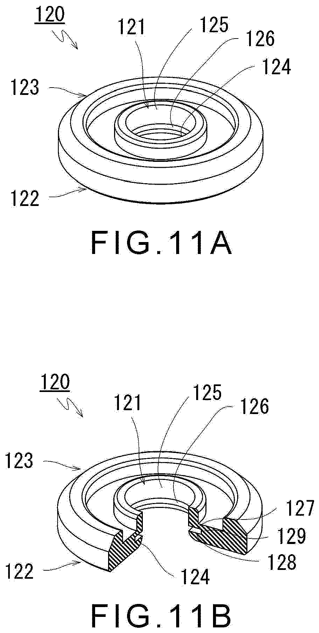

Hereinafter, a deformation process of the valve seat 120 is described based on FIG. 11.

First, FIG. 11A is a diagram illustrating a state in which the valve body 91 is moved until coming into contact with the inner peripheral edge 124 of the valve seat 120, and when the valve body 91 further moves in the direction of the valve seat 120 therefrom, a pressing force is applied to the valve seat 120 by the valve body 91.

FIG. 11B is a diagram illustrating a state in which the valve body 91 further moves in the direction of the valve seat 120. As illustrated in FIG. 11B, by causing elastic deformation in which the seat surface 122 side of the valve seat 120 is bent so as to approach the back surface 123 side such that the gap of the annular groove 126 narrows, the valve can be reliably closed in close contact with the valve body 91.

Thereafter, if the fluid in the pressure adjusting chamber 15 is discharged, and the pressure in the pressure adjusting chamber 15 decreases, when the diaphragm 13 is pushed by the pressure adjusting spring 60, and the valve seat 120 and the valve body 91 return to the valve open state of being separated from each other, the valve seat also returns from the deformed state to the original state before the deformation illustrated in FIG. 11A.

As described above, according to the present invention, it becomes possible to prevent leakage failure by intentionally elastically deforming a valve seat by an annular groove formed in the valve seat and to exhibit more excellent sealing performance.

The regulator of the present invention is used for depressurizing a high-pressure fluid to a desired pressure and is particularly suitable as a regulator for supplying high-pressure fuel such as compressed natural gas (CNG) stored in a fuel tank to an engine in an automobile.

### Reference Signs List

1, 2, 3, 4, 5, 6 regulator
10A, 10B, 10C body
11 communication hole
12 cartridge container
13 diaphragm
14 atmospheric pressure chamber
15 pressure adjusting chamber
20 passage
21 input side
22 output side
23 decompression chamber
24 atmospheric pressure chamber
25 pressure adjusting chamber
30 inlet cover
31 introduction port
32 fixing portion
33 valve seat holding hole
34 valve seat holding piece mounting portion
35 cylindrical body
36 valve seat holding piece
37 fixing tool
40 outlet cover
41 extraction port
42 fixing tool
50 piston
51 valve body
52 inlet-side piston portion
53 outlet-side piston portion
54 fluid passage
55 seal member
56 seal member
57 collar
58 conduction hole
59 pin
60 pressure adjusting spring
70 valve seat holding member
71 valve seat holding hole
72 screw hole
73 fixing screw
74 head portion
75 through hole
80 piston
81 valve body
82 piston portion
83 fluid passage
84 seal member
85 seal member
91 valve body
92 valve shaft
100 valve seat
101 center hole
102 seat surface
103 back surface
104 inner peripheral edge
105 inner peripheral surface
106 annular groove
107 side surface
108 side surface
109 bottom surface
110 valve seat
111 center hole
112 seat surface
113 back surface
114 outer peripheral edge
115 outer peripheral surface
116 annular groove
117 side surface
118 side surface
119 bottom surface
120 valve seat
121 center hole
122 seat surface
123 back surface
124 inner peripheral edge
125 inner peripheral surface
126 annular groove
127 side surface
128 side surface
129 bottom surface
131 spring
132 plate
GD1, GD2, GD3 diameter of annular groove
SD1, SD2, SD3 seal diameter of valve body

## Claims

1. A regulator that depressurizes a pressure of a high-pressure fluid to obtain a fluid adjusted to a desired pressure, the regulator comprising:
an annular valve seat that is formed of an elastic material and has a center hole in a center; and
a valve body that is movable in an axis direction and is brought into contact with or separates from one of an inner peripheral edge and an outer peripheral edge of the valve seat, **characterized in that**
in the valve seat, an annular groove is formed on one of an inner peripheral surface or an outer peripheral surface to which a peripheral edge in contact with the valve body belongs, and
a surface of the valve body in contact with the valve seat is inclined with respect to the axis direction.

2. The regulator according to claim 1, **characterized in that** a corner portion of the valve seat in contact with the valve body has a rounded shape.

3. The regulator according to claim 1, **characterized in that** a shape of the annular groove is a U-shaped groove having a U-shaped cross section in which both side surfaces of the groove are parallel, and a bottom surface of the groove is a concave curved surface, or a Π-shaped groove having a Π-shaped cross section in which both side surfaces of the groove are parallel, and a bottom surface of the groove is a flat surface.

4. The regulator according to claim 1, 2, or 3, **characterized in that** the valve body has a tapered shape with a small diameter on a distal end side.

5. The regulator according to claim 4, **characterized in that** a groove diameter of the annular groove is equal to or larger than a seal diameter of the valve body.

6. The regulator according to claim 1, 2, or 3, **characterized in that** the valve body has a reversely tapered shape with a large diameter on a distal end side and also has a cylindrical shape having a fluid passage through which a fluid can pass.

7. The regulator according to claim 6, **characterized in that** a groove diameter of the annular groove is equal to or less than a seal diameter of the valve body.
